# EUROPEAN PATENT APPLICATION

(11) **EP 4 770 017 A1**
(43) Date of publication of application: **01.07.2026**
(21) Application number: 25816172.8
(22) Date of filing: 11.04.2025
(51) Int. Cl.: H04L 12/12, B60R 16/023, B60L 58/18, H01M 10/48, H04L 12/10, H04L 12/40

(54) **SIGNAL PROCESSING DEVICE, AND VEHICLE AND METHOD INCLUDING SAME**

(30) Priority: 29.05.2024 KR 20240070061
(71) Applicant: LG ENERGY SOLUTION, LTD., Seoul 07335 (KR)
(72) Inventor: LEE, Ye Seul, Daejeon 34122 (KR); YANG, Seong Yeol, Daejeon 34122 (KR)
(74) Representative: Plasseraud IP
(86) International application number: PCT/KR2025/004942
(87) International publication number: WO 2025/249758

(57) **Abstract**

According to an embodiment disclosed in this document, a signal processing device may include a main control unit, an auxiliary control unit electrically connected to the main control unit, and an end device electrically connected to the auxiliary control unit, in which the main control unit may transmit a wake-up signal to the auxiliary control unit when power is supplied, and the auxiliary control unit may bypass the wake-up signal and transmit the wake-up signal to the end device.

## Description

### TECHNICAL FIELD

### Cross-reference to Related Applications

This application claims priority from Korean Patent Application No. 10-2024-0070061, filed on May 29, 2024, the disclosures of which are incorporated by reference herein.

### Technical Field

Embodiments disclosed in this document relate to a signal processing device and method, and a vehicle including the signal processing device.

### BACKGROUND ART

As electric vehicles powered by electricity become widespread, research and development on new vehicle architectures are actively being conducted. For example, the electric vehicle may be powered by secondary batteries. Here, secondary batteries are batteries that can be charged and discharged, and may be interpreted as including both conventional Ni/Cd batteries, Ni/MH batteries, and recent lithium ion batteries. Among secondary batteries, lithium ion batteries have the advantage of having much higher energy density than conventional Ni/Cd batteries and Ni/MH batteries, etc. In addition, lithium ion batteries may be manufactured to be small and lightweight, and thus lithium ion batteries are used as power sources for mobile devices. Recently, the scope of use of the lithium ion batteries has expanded to include a power source for electric vehicles, and the lithium ion batteries are attracting attention as a next-generation energy storage medium.

Such battery cells, battery modules, battery packs, or battery racks may be utilized in various devices. As an example, batteries may be utilized not only in mobile devices such as mobile phones, laptop computers, smart phones, and smart pads, but also in the fields of vehicles powered by electricity (EVs, HEVs, and PHEVs), large-capacity power storage devices (ESS), etc.

The state and operation of these batteries may be managed and controlled by a battery management system (BMS). The battery management system may be included together with the battery in a single apparatus.

Meanwhile, as the automobile industry changes, the concept of future mobility such as software defined vehicle (SDV) and purpose-built vehicle (PBV) is gradually becoming more concrete. For example, the SDV means a car that controls and manages hardware with software. Software according to the SDV can define not only the driving performance of the car, but also the convenience functions, safety functions, emotional quality of the car, and the brand's identity. By the architecture through the SDV, vehicle development costs can be reduced through the commonization of ECU and internalization of software. In addition, autonomous driving technology can be advanced through high-performance computers and networks based on an electronic architecture.

### DISCLOSURE OF THE INVENTION

### TECHNICAL PROBLEM

In the process of autonomous driving control for a vehicle, it is becoming increasingly important to manage and store data and/or signals according to autonomous driving. In particular, there is a growing need for technology that efficiently performs algorithms to supply power and perform communication to operate components of the vehicle.

Embodiments disclosed in this document provide a signal processing device and method including an algorithm for efficiently transmitting and processing a signal (e.g., a wake-up signal) for starting operation between a plurality of components (e.g., an HPC, a zonal controller, an end device) in a vehicle including an SDV structure, and directly transmitting and receiving a control signal for faster communication, particularly when an abnormality occurs in a specific component, and a vehicle including the signal processing device.

The technical problems of the embodiments disclosed in this document are not limited to the technical problems mentioned above, and other technical problems that are not mentioned may be clearly understood by those skilled in the art from the descriptions below.

### TECHNICAL SOLUTION

According to an embodiment disclosed in this document, a main control unit, an auxiliary control unit electrically connected to the main control unit, and an end device electrically connected to the auxiliary control unit may be included.

According to an embodiment, the main control unit may be configured to transmit a wake-up signal to the auxiliary control unit when power is supplied.

According to an embodiment, the auxiliary control unit may be configured to bypass the wake-up signal and transmit the wake-up signal to the end device.

According to an embodiment, the auxiliary control unit may be configured to perform booting and activate a peripheral device of the auxiliary control unit based on receiving the wake-up signal.

According to an embodiment, the end device may be configured to start data gathering based on receiving the wake-up signal while the auxiliary control unit performs booting.

According to an embodiment, the auxiliary control unit may be configured to receive a first control signal of a first layer for controlling the end device regarding a battery pack of an its own vehicle from the main control unit, convert the first control signal into a second control signal of a second layer using a conversion unit and then process the second control signal, and convert the processed second control signal into a third control signal of the first layer using the conversion unit and then transmit the third control signal to the end device.

According to an embodiment, the first layer may include a PHY layer, and the second layer may include a MAC layer.

According to an embodiment, the auxiliary control unit may be configured to convert the first control signal including a TD+ signal or a TD- signal into the second control signal including a Media Independent Interface (MII) signal.

According to an embodiment, the main control unit may be configured to transmit an emergency control signal of a first layer for controlling the end device to the auxiliary control unit when identifying that a designated event has occurred in at least one of a plurality of auxiliary control units including the auxiliary control unit and a plurality of end devices including the end device.

According to an embodiment, the auxiliary control unit may be configured to bypass the emergency control signal and transmit the emergency control signal to the end device.

According to an embodiment, the main control unit may be configured to determine that the designated event has occurred when at least one of a temperature, pressure, current, or any combination thereof of a battery pack included in the end device deviates from a critical range, or when an abnormality occurs in at least one of the plurality of auxiliary control units such that data is not transmitted to the main control unit or a connection with the end device should be blocked.

According to an embodiment disclosed in this document, a vehicle including any one of the signal processing devices described above may be provided.

According to an embodiment disclosed in this document, a signal processing method may include transmitting, by a main control unit, a wake-up signal to an auxiliary control unit when power is supplied to a signal processing device, and bypassing the wake-up signal and transmitting the wake-up signal to the end device, by the auxiliary control unit.

According to an embodiment disclosed in this document, the signal processing method may further include performing, by the auxiliary control unit, booting and activating a peripheral device of the auxiliary control unit based on receiving the wake-up signal, and starting, by the end device, data gathering based on receiving the wake-up signal while the auxiliary control unit performs booting.

According to an embodiment disclosed in this document, the signal processing method may further include receiving, by the auxiliary control unit, a first control signal of a first layer for controlling the end device regarding a battery pack of an its own vehicle from the main control unit, by the auxiliary control unit, converting the first control signal into a second control signal of a second layer using a conversion unit and then processing the second control signal and by the auxiliary control unit, converting the processed second control signal into a third control signal of the first layer using the conversion unit and then transmitting the third control signal to the end device.

According to an embodiment disclosed in this document, the signal processing method may further include converting, by the auxiliary control unit, the first control signal including a TD+ signal or a TD- signal into the second control signal including a Media Independent Interface (MII) signal.

According to an embodiment disclosed in this document, the signal processing method may further include transmitting, by the main control unit, an emergency control signal of a first layer for controlling the end device to the auxiliary control unit when identifying that a designated event has occurred in at least one of a plurality of auxiliary control units including the auxiliary control unit and a plurality of end devices including the end device, and by the auxiliary control unit, bypassing the emergency control signal and transmitting the emergency control signal to the end device.

According to an embodiment disclosed in this document, the signal processing method may further include determining, by the main control unit, that the designated event has occurred when at least one of a temperature, pressure, current, or any combination thereof of a battery pack included in the end device deviates from a critical range, or when an abnormality occurs in at least one of the plurality of auxiliary control units such that data is not transmitted to the main control unit or a connection with the end device should be blocked.

According to an embodiment disclosed in this document, an auxiliary control unit for controlling a signal processing device may include a memory storing at least one instruction and a processor operatively connected with the memory

According to an embodiment, the at least one instruction, when executed by the processor, may be configured to cause the auxiliary control unit to receive a wake-up signal from a main control unit when power is supplied to the signal processing device, and to bypass the wake-up signal and transmit the wake-up signal to an end device.

According to an embodiment, the at least one instruction, when executed by the processor, may be configured to cause the auxiliary control unit to perform booting and activate a peripheral device of the auxiliary control unit based on receiving the wake-up signal.

According to an embodiment, the at least one instruction, when executed by the processor, may be configured to cause the auxiliary control unit to receive a first control signal of a first layer for controlling the end device regarding a battery pack of an its own vehicle from the main control unit, convert the first control signal into a second control signal of a second layer using a conversion unit and then process the second control signal, and convert the processed second control signal into a third control signal of the first layer using the conversion unit and then transmit the third control signal to the end device.

According to an embodiment, the at least one instruction, when executed by the processor, may be configured to cause the auxiliary control unit to receive an emergency control signal of a first layer for controlling the end device from the main control unit based on an occurrence of a designated event in at least one of a plurality of auxiliary control units including the auxiliary control unit and a plurality of end devices including the end device, and to bypass the emergency control signal and transmit the emergency control signal to the end device.

### ADVANTAGEOUS EFFECTS

The signal processing device and method according to the embodiments disclosed in this document can provide a relatively fast and stable signal processing method for a vehicle by efficiently implementing a path for transmitting various signals (e.g., wake-up signal and control signal) to an end device under an SDV structure and quickly operating the end device through this structure.

In addition, a variety of effects can be provided that are identified directly or indirectly through this document.

### BRIEF DESCRIPTION OF THE DRAWINGS

FIG. 1 is a conceptual diagram showing a structure of a vehicle including a signal processing device according to an embodiment disclosed in this document.
FIG. 2 is a conceptual diagram showing a structure of a vehicle including a signal processing device according to an embodiment disclosed in this document.
FIG. 3 is a block diagram showing a configuration of a signal processing device according to an embodiment disclosed in this document.
FIG. 4 is a block diagram showing a configuration of an end device according to an embodiment disclosed in this document.
FIG. 5 is a block diagram showing a configuration of a signal processing device according to an embodiment disclosed in this document.
FIG. 6 is a block diagram showing a configuration of a signal processing device according to an embodiment disclosed in this document.
FIG. 7 is a block diagram showing a configuration of a signal processing device according to an embodiment disclosed in this document.
FIG. 8 is a graph showing an operation sequence by a signal processing method according to an embodiment disclosed in this document.
FIG. 9 is a graph showing an operation sequence by a signal processing method according to an embodiment disclosed in this document.
FIG. 10 is a flowchart of a signal processing method according to an embodiment disclosed in this document.
FIG. 11 is a flowchart of a signal processing method according to an embodiment disclosed in this document.
FIG. 12 is a block diagram showing a hardware configuration of a computing system for performing an operating method of a signal processing device according to an embodiment disclosed in this document.

### MODE FOR CARRYING OUT THE INVENTION

Hereinafter, various embodiments of the present disclosure will be described with reference to the accompanying drawings. However, this is not intended to limit the present disclosure to a specific embodiment, but should be understood to include various modifications, equivalents, and/or alternatives of the embodiments of the present disclosure.

In this document, the singular form of a noun corresponding to an item may include one or more of said item, unless the relevant context clearly indicates otherwise. In this document, each of phrases "A or B", "at least one of A and B", "at least one of A or B", "A, B, or C", "at least one of A, B, and C", and "at least one of A, B, or C" may include any one of the items listed together in that phrase among the phrases, or all possible combinations thereof. Terms such as "first", "second", or "firstly" or "secondly" may be used merely to distinguish one component from another, and do not limit the components in any other respect (e.g., importance or order). When a component (e.g., a first component) is referred to as being "coupled" or "connected" to another component (e.g., a second component), with or without the terms "functionally" or "communicatively", it means that the component can be connected to the other component directly (e.g., in a wired manner), or wirelessly through a third component.

Each of the components described in this document (e.g., modules or programs) may contain a singular or multiple entities. According to various embodiments, one or more of the components among the components or operations may be omitted, or one or more other components or operations may be added. Alternatively or additionally, a plurality of components (e.g., modules or programs) may be integrated into a single component. In such a case, the integrated component may perform one or more functions of each of the plurality of components identically or similarly to those performed by the corresponding component among the plurality of components prior to the integration. According to various embodiments, the operations performed by a module, program, or other component may be performed sequentially, in parallel, repeatedly, or heuristically, or one or more of the operations may be performed in a different order, omitted, or performed by being added with one or more other operations.

The term "module" or "... unit" used in this document may include a unit implemented in hardware, software or firmware, and may be used interchangeably with terms such as logic, logic blocks, parts, or circuits, for example. The module may be a part that is integrally formed or a minimum unit or portion of the part that performs one or more functions. For example, according to an embodiment, the module may be implemented in the form of an application-specific integrated circuit (ASIC).

Various embodiments of this document may be implemented as software (e.g., a program or an application) including one or more instructions stored in a machine readable storage medium (e.g., a memory). For example, a processor of the machine may call at least one instruction among the one or more instructions stored from the storage medium and execute the instruction. This enables the machine to operate to perform at least one function according to the at least one instruction called. The one or more instructions may include code generated by a compiler or code executable by an interpreter. The machine-readable storage medium may be provided in the form of a non-transitory storage medium. Here, 'non-transitory' means only that the storage medium is a tangible device and does not contain a signal (e.g., electromagnetic waves), and this term does not distinguish between a case where data is stored semi-permanently and a case where data is stored temporarily in the storage medium.

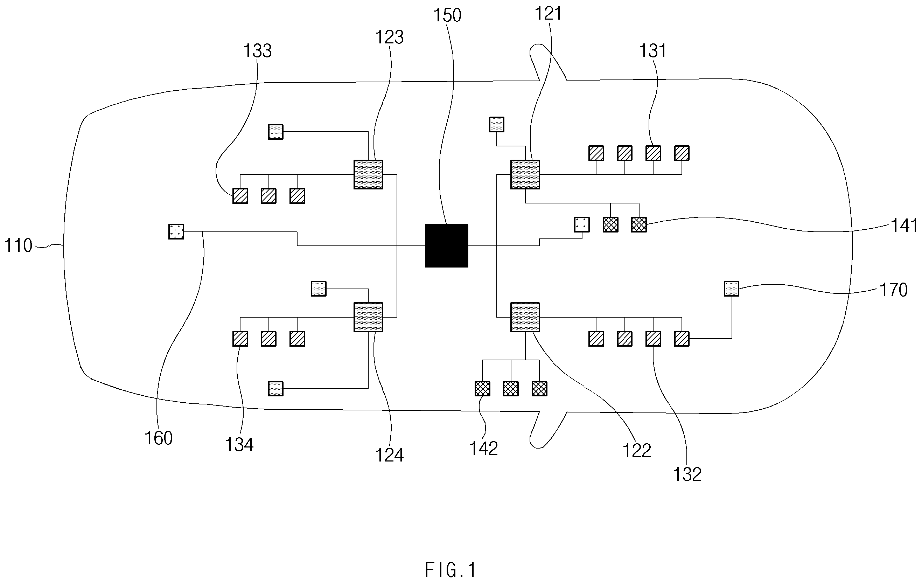

FIG. 1 is a conceptual diagram showing a structure of a vehicle including a signal processing device according to an embodiment disclosed in this document.

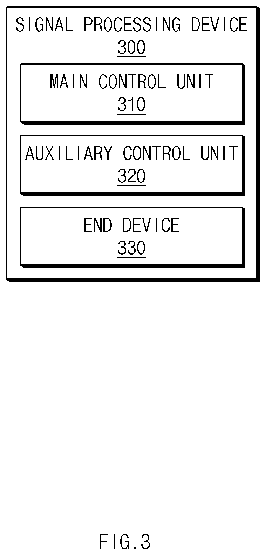

According to an embodiment, a signal processing device (e.g., a signal processing device 300 of FIG. 3) may include at least some of components included in a vehicle 110 according to the SDV architecture. The signal processing device may, for example, manage power, signal and/or data transmitted and received between the components of the vehicle 110.

For example, the vehicle 110 may include at least one of a first zone controller 121, a second zone controller 122, a third zone controller 123, a fourth zone controller 124, a first end device 131, a second end device 132, a third end device 133, a fourth end device 134, a first actuator 141, a second actuator 142, a high performance computer (HPC) 150, a transmission and reception path 160, an additional element 170, or any combination thereof. The signal processing device for signal processing of the vehicle 110 may include at least some of the components included in the vehicle 110.

For example, the components according to the SDV architecture may include a hierarchical structure in the order of the HPC 150, the zone controllers, and the end devices.

As an example, the HPC 150 may be connected to the first zone controller 121, the second zone controller 122, the third zone controller 123, and the fourth zone controller 124, and may transmit and receive various types of data to and from each zone controller.

As an example, the first zone controller 121, the second zone controller 122, the third zone controller 123, and the fourth zone controller 124 may control the first end device 131, the second end device 132, the third end device 133, and the fourth end device 134, respectively. The end device may include, for example, at least one of a sensor for controlling the vehicle 110, a battery (or BMS) for driving the vehicle 110, or any combination thereof. As an example, when one of the second end devices 132 is the BMS, the additional element 170 may be defined as a battery pack.

As an example, the first zone controller 121 and the second zone controller 122 may control the first actuator 141 and the second actuator 142, respectively. The actuator may include, for example, at least one driving device for driving the vehicle 110.

For example, the components described above may perform communication based on a designated path (e.g., a transmission and reception path 160) through automotive Ethernet.

The signal processing device according to an embodiment of this document may control and manage a communication process of power, signal and/or data transmitted and received between the components described above.

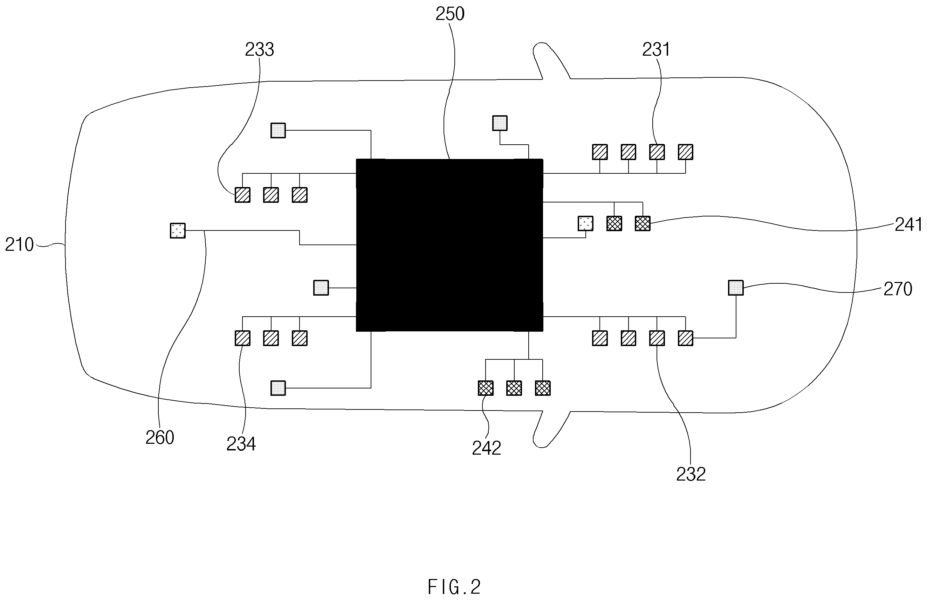

FIG. 2 is a conceptual diagram illustrating a structure of a vehicle including a signal processing device according to an embodiment disclosed in this document.

In FIG. 2, the description of the components defined with the same names as in FIG. 1 may be replaced with the description of FIG. 1 described above.

For example, an its own vehicle 210 may include at least one of a first end device 231, a second end device 232, a third end device 233, a fourth end device 234, a first actuator 241, a second actuator 242, a high performance computer (HPC) 250, a transmission and reception path 260, an additional element 270, or any combination thereof. A signal processing device for signal processing of the its own vehicle 210 may include at least some of the components included in the its own vehicle 210.

For example, the its own vehicle 210 according to FIG. 2 does not include a zone controller as compared to FIG. 1. That is, even if the SDV architecture is adopted, the its own vehicle 210 may be implemented with a structure in which the HPC 250 directly controls at least one end device as in FIG. 2.

FIG. 3 is a block diagram showing a configuration of a signal processing device according to an embodiment disclosed in this document.

Referring to FIG. 3, a power management device 300 may include a main control unit 310, an auxiliary control unit 320, and an end device 330.

According to an embodiment, the signal processing device 300 may perform management of power and/or data between components for controlling an its own vehicle. For example, the its own vehicle may be operated by components according to the SDV architecture. For example, the SDV may include a hierarchical structure in the order of high performance computer (HPC), zone, end device, and sensor/actuator. In this case, a vehicle according to the SDV may be divided into a plurality of zones, and each zone may include a control unit (e.g., a zone controller) for controlling components of a lower layer included in the zone. The control unit of the zone is electrically connected to the HPC and may transmit and receive various signals. The above-described contents are exemplary, and the embodiments of the present invention are not limited thereto. For example, according to another embodiment according to the SDV architecture (e.g., an embodiment of the SDV architecture according to FIG. 2), the HPC and the end device are operatively connected to each other, and the zone may be omitted.

For example, the main control unit 310 may correspond to the HPC 150 and/or 250 of FIG. 1 and/or FIG. 2, and the auxiliary control unit 320 may correspond to the zone controller 121, 122, 123, or 124 of FIG. 1. Although the auxiliary control unit 320 is illustrated as one auxiliary control unit in FIG. 1, this is exemplary, and the signal processing device may include a plurality of auxiliary control units corresponding to a plurality of zones, respectively.

For example, the end device 330 may be at least one of the end devices of FIG. 1 and/or FIG. 2. The end device 330 may include, for example, a battery management system (BMS) and may include at least one MCU for controlling a battery provided for driving an its own vehicle.

For example, the main control unit 310, the auxiliary control unit 320, and/or the end device 330 may each include a memory storing at least one instruction and a processor operatively connected to the memory. The processor may be implemented as an MCU, but this is exemplary and the embodiments of this document are not limited thereto. In addition, at least one instruction, when executed by the processor, may be configured to cause the main control unit 310, the auxiliary control unit 320, and/or the end device 330 to perform at least some of the operations described below.

The signal processing device 300 may transmit and receive at least one of power, data (e.g., a wake-up signal), control signal, or any combination thereof to and from components included in an electronic apparatus. In an embodiment, the electronic apparatus may be a mobile device (e.g., a mobile phone, a laptop computer, a smart phone, a smart pad), an electric vehicle (e.g., an electric vehicle (EV), a hybrid EV (HEV), a plug-in HEV (PHEV), and a fuel cell EV (FCEV)), an energy storage system (ESS), or a battery swapping system (BSS). In an embodiment, the electronic apparatus may include a vehicle (e.g., an electric vehicle, a hybrid vehicle, etc.) and a moving object driven based on electric energy. In other words, for example, the signal processing device 300 may be included in the vehicle and provided to manage data for operation of the vehicle (e.g. operation for autonomous driving control).

The operation of the signal processing device 300 described below may be performed by a battery management system (BMS) in the vehicle, a battery BMS provided in a battery pack, and may be performed in various devices such as servers, clouds, chargers, or chargers/dischargers.

According to an embodiment, the main control unit 310 and the auxiliary control unit 320 may be electrically connected to each other, and the auxiliary control unit 320 and the end device 330 may be electrically connected to each other.

For example, the main control unit 310 and the auxiliary control unit 320 may be electrically connected to each other. The main control unit 310 and the auxiliary control unit 320 may be electrically connected to, for example, other components (e.g., at least one end device). The end device may include, for example, a battery management system (BMS).

For example, each processor included in the main control unit 310 and the auxiliary control unit 320 may include a central processing unit, an application processor, a graphic processing unit, a neural processing unit (NPU), an image signal processor, a sensor hub processor, or a communication processor.

The functions and operations of the signal processing device 300 described below may be performed by one processor (or, the main control unit 310 and/or the auxiliary control unit 320), or the functions may be separated at least in part and performed by a plurality of processors.

According to an embodiment, the zone corresponding to the auxiliary control unit 320 may be one of a plurality of physically separated zones of the its own vehicle. For example, the plurality of zones may include a front zone including a front area, a rear zone including a rear area, a left zone including a left area, and a right zone including a right area, of the its own vehicle.

According to an embodiment, each zone may include a controller (e.g., an auxiliary control unit 320) for controlling and managing components (e.g., sensors, actuators, cameras, driving and braking devices, batteries, etc.) for operating the its own vehicle.

According to an embodiment, the main control unit 310 may wake up the auxiliary control unit 320 and/or the end device 330. For example, the main control unit 310 may wake up the auxiliary control unit 320 and the end device 330 when power is supplied to the signal processing device 300 (or to the its own vehicle).

For example, when the main control unit 310 is supplied with power, the main control unit 310 may transmit a wake-up signal to the auxiliary control unit 320.

For example, the auxiliary control unit 320 may be woken up based on receiving the wake-up signal from the main control unit 310. The auxiliary control unit 320 may, for example, perform booting and activate (or init) the peripheral device of the auxiliary control unit 320 based on receiving the wake-up signal.

For example, the auxiliary control unit 320 may bypass the wake-up signal received from the main control unit 310 and transmit the wake-up signal to the end device 330.

As an example, the auxiliary control unit 320 may directly transmit the wake-up signal to the end device 330 without performing processing on the wake-up signal.

For example, the end device 330 may be woken up and perform various operations based on receiving the wake-up signal.

As an example, the end device 330 may receive the wake-up signal substantially simultaneously while the auxiliary control unit 320 performs booting, and may start data gathering. Through this, the signal processing unit 300 may quickly start the wake-up and data gathering of the end device 330.

For example, when the end device 330 is woken up, the main control unit 310 may transmit a first control signal of a first layer for controlling the end device 330 to the auxiliary control unit 320, and the auxiliary control unit 320 may process the first control signal and transmit the first control signal to the end device 330.

As an example, the main control unit 310 may first transmit the first control signal to the auxiliary control unit 320 in order to perform battery pack control based on the control of the end device 330 regarding the battery pack.

As an example, when the auxiliary control unit 320 receives the first control signal, the auxiliary control unit 320 may convert the first control signal into a second control signal of a second layer using a conversion unit (e.g., integrated circuits (IC)) and then process the second control signal using an MCU.

As an example, the auxiliary control unit 320 may convert the processed second control signal into a third control signal of the first layer and then transmit the converted third control signal to the end device.

As an example, the auxiliary control unit 320 may convert the first control signal including a transmit data (TD)+ signal or a TD- signal into the second control signal including a Media Independent Interface (MII) signal.

As an example, the first layer may include a PHY layer, and the second layer may include a MAC layer. In other words, a control signal based on a PHY layer is transmitted between devices, and the control signal may be converted to a MAC layer for processing via an MCU.

As in the example described above, when transmitting the wake-up signal to the end device 330, the auxiliary control unit 310 may transmit the wake-up signal to the end device 330 by bypassing and without going through the converter or MCU, and when transmitting another control signal other than the wake-up signal, the auxiliary control unit 310 may reconvert the control signal processed through the conversion unit and MCU and transmit the control signal to the end device 330, but this is exemplary, and the main control unit 310 may determine a transmission path of a signal based on a type of signal to be transmitted, included information, a state of the main control unit 310, an operating state of the auxiliary control unit 320 and/or the end device 330.

For example, if the main control unit 310 identifies that a designated event has occurred in at least one of a plurality of auxiliary control units including the auxiliary control unit 320 and a plurality of end devices including the end device 330, the main control unit 310 may transmit an emergency control signal of a first layer for controlling the end device 330 to the auxiliary control unit 320. The auxiliary control unit 320 may bypass the emergency control signal and transmit the emergency control signal to the end device 330. The transmission path of the emergency control signal may be determined by the main control unit 310 or the auxiliary control unit 320.

As an example, when at least one of the temperature, pressure, current, or any combination thereof of the battery pack included in the end device 330 deviates from a critical range, the main control unit 310 or the auxiliary control unit 320 may determine that a designated event has occurred.

As an example, when it is determined that data is not transmitted to the main control unit 310 due to an occurrence of abnormality in at least one of the plurality of auxiliary control units, or that the connection with the main control unit 310 and the end device 330 should be blocked, the main control unit 310 or the auxiliary control unit 320 may determine that the designated event has occurred.

For example, the end device 330 may be electrically connected to the main control unit 310 and/or the auxiliary control unit 320.

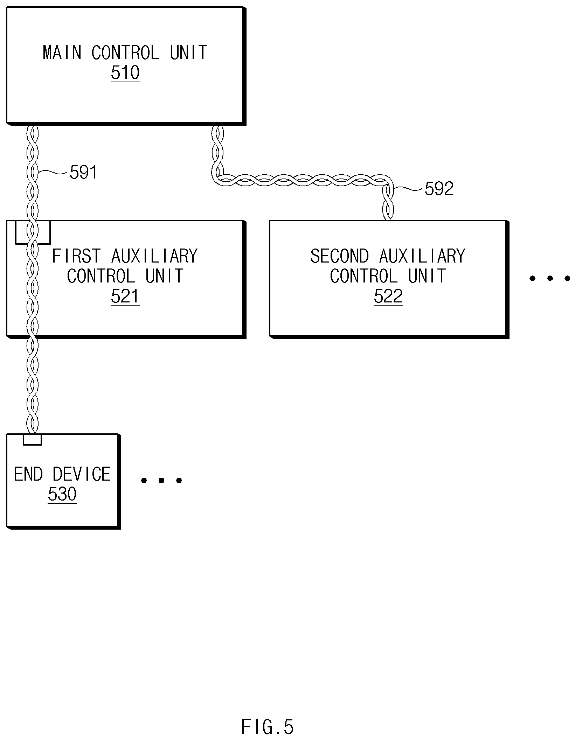

For example, the end device 330 may communicate with the main control unit 310 by bypassing the auxiliary control unit 520 through a first interface (e.g., a first interface 581 of FIG. 5) that is electrically connected to the main control unit 310.

As an example, the end device 330 may receive a wake-up signal transmitted by bypassing the auxiliary control unit 320 from the main control unit 310, through the first interface. The end device 330 may also directly receive other control signals except for the wake-up signal through the first interface, depending on an operating state of the main control unit 310, the auxiliary control unit 320, the end device 330, the its own vehicle, etc. In this case, the end device 330 may control the operation of the battery pack based on a result obtained by receiving the first control signal of the first layer for controlling the battery pack included in the end device 330 from the main control unit 310, converting the first control signal into the second control signal of the second layer using a conversion unit, and processing the second control signal using the MCU.

For example, the end device 330 may communicate with the auxiliary control unit 310 through a second interface (e.g., a second interface 582 of FIG. 5) that is electrically connected to the main control unit 310 and is distinct from the first interface.

As an example, the end device 330 may receive a control signal transmitted from the main control unit 310 or the auxiliary control unit 320 through the second interface. The end device 330 may also receive a wake-up signal transmitted through the second interface, for example, depending on the operating state of the main control unit 310, the auxiliary control unit 320, the end device 330, the its own vehicle, etc.

For example, if the end device 330 identifies that a designated event including an error situation has occurred in the signal processing device 300 (or, the vehicle including the signal processing device 300), the end device 330 may deactivate at least some of the communication paths for signal transmission.

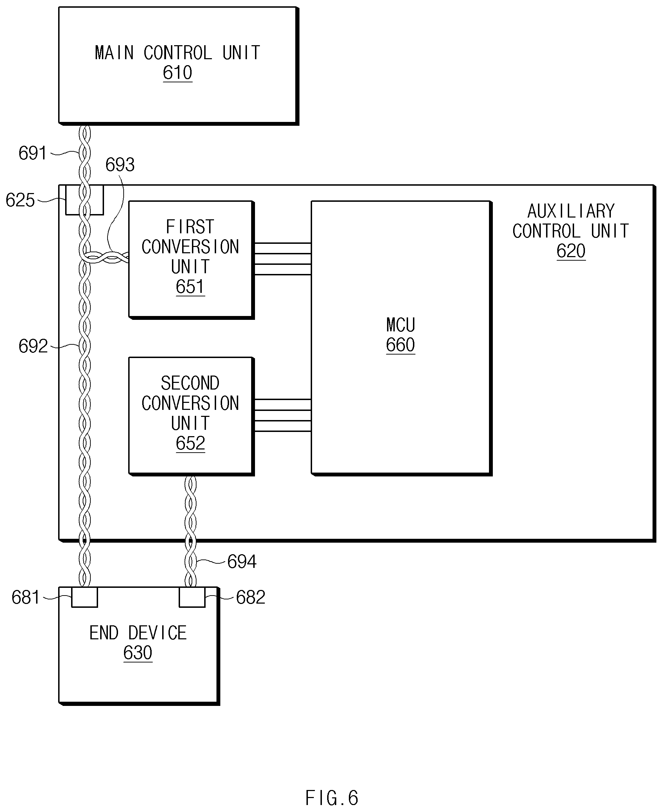

As an example, if it is identified that the designated event including the error situation has occurred, the end device 330 may activate a first communication path (e.g., a first communication path 681 of FIG. 6) connected to the main control unit 310 by bypassing the auxiliary control unit 320 and deactivate a second communication path (e.g., a second communication path 682 of FIG. 6) connected to the main control unit 310 through the auxiliary control unit 320. The end device 330 may transmit and receive an emergency control signal related to the designated event to and from the main control unit 310 via the first communication path, for example, through the first interface. Through this, the end device 330 may directly communicate with the main control unit 310, thereby shortening the transmission time of the control signal.

As an example, when an internal error regarding the operation of a battery pack included in the end device 330 is identified, or an external error is received from the auxiliary control unit 320 through the second communication path, or an LOC signal (e.g., a signal including location information of an error situation) regarding an error situation is detected, the end device 330 may identify that a designated event has occurred.

As an example, if an abnormality symptom regarding an external device (e.g., another end device) that is distinct from the end device 330 is identified based on data received from the auxiliary control unit 320 through the second communication path, the end device 330 may determine that an external error has been received.

The operation of the main control unit 310 described above may also be performed by the auxiliary control unit 320. In other words, the auxiliary control unit 320 may perform at least some of the operations of the main control unit 310 described above.

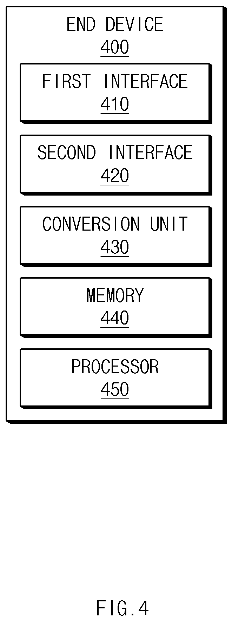

FIG. 4 is a block diagram showing the configuration of an end device according to an embodiment disclosed in this document.

According to an embodiment, an end device 400 (e.g., an end device 330 of FIG. 3) may include a first interface 410, a second interface 420, a conversion unit 430, a memory 440, and a processor 440. The configuration of the end device 400 illustrated in FIG. 4 is exemplary, and embodiments of the present invention are not limited thereto. For example, the end device 400 may further include components not illustrated in FIG. 4 (e.g., at least one of a communication unit, a display unit, a notification unit, or any combination thereof).

According to an embodiment, the first interface 410 may be connected to the main control unit and may support one or more designated protocols capable of transmitting and receiving power, signals, and/or data.

According to an embodiment, the second interface 420 may be connected to the auxiliary control unit and may support one or more designated protocols capable of transmitting and receiving power, signals, and/or data. The second interface 420 may be provided to be physically separated from the first interface 410, for example.

According to an embodiment, the conversion unit 430 may convert a layer of a signal. The conversion unit 430 may, for example, convert a signal of the first layer (e.g., the PHY layer) into a signal of the second layer (e.g., the MAC layer), or may convert a signal of the second layer into a signal of the first layer.

According to an embodiment, the memory 440 may store an instruction or data. For example, the memory 440 may store one or more instructions that, when executed by the processor 450, cause the end device 400 to perform various operations.

For example, the memory 440 may be implemented as a single chipset with the processor 450. The processor 450 may include at least one of a communication processor or a modem.

For example, the memory 440 may store various pieces of information related to the end device 400. As an example, the memory 440 may store information about the operation history of the processor 450. As an example, the memory 440 may store information related to the state and/or operation of components of the end device 400 (or the signal processing device 300 of FIG. 3).

For example, the memory 440 may include a plurality of storage devices of different types. For example, the memory 440 may include at least one of a random-access memory (RAM), an embedded multi-media card (eMMC), or any combination thereof.

According to an embodiment, the processor 450 may be operatively connected to the memory 440. For example, the processor 450 may control the operation of the first interface 410, the second interface 420, the converter 430, and/or the memory 440.

For example, the processor 450 may be implemented as one of a micro controller unit (MCU), a domain controller unit (DCU), or a zone control unit (ZCU).

For example, the processor 450 may communicate with a main control unit through the first interface 410 that is electrically connected to the main control unit. The first interface 410 may, for example, receive a signal transmitted by bypassing the auxiliary control unit from the main control unit. The first interface 410 may, for example, receive a wake-up signal transmitted by bypassing the auxiliary control unit from the main control unit.

For example, the processor 450 may communicate with the main control unit or the auxiliary control unit through the second interface 420 that is electrically connected to the auxiliary control unit. The second interface 420 may receive, for example, a signal transmitted from the main control unit and processed by the auxiliary control unit and/or a signal generated and processed by the auxiliary control unit and transmitted. The second interface 420 may receive, for example, a control signal transmitted from the main control unit or the auxiliary control unit. The control signal may include, for example, a signal related to the control of a battery pack included in the end device 400 (or controlled by the end device 400).

For example, the processor 450 may control the operation of the battery pack based on a result obtained by receiving the first control signal of the first layer for controlling the battery pack from the main control unit through the first interface 410, converting the first control signal into the second control signal of the second layer using the conversion unit 430, and processing the second control signal using the processor 450.

For example, if it is identified that a designated event including an error situation has occurred, the processor 450 may activate a first communication path connected to the main control unit by bypassing the auxiliary control unit and deactivate a second communication path connected to the main control unit through the auxiliary control unit. In other words, the first communication path may include a communication path through the first interface 410, and the second communication path may include a communication path through the second interface 420.

For example, the processor 450 may transmit and receive an emergency control signal related to a designated event to and from the main control unit via the first communication path. The processor 450 may identify that a designated event has occurred, as an example, when an internal error regarding the operation of the battery pack included in the end device 400 is identified, an external error is received from the auxiliary control unit through the second communication path, or the LOC signal regarding an error situation is detected. The processor 450 may determine that an external error has been received, as an example, when an abnormality symptom regarding an external device (e.g., an end device that controls components of an its own vehicle other than the battery pack) that is distinct from the end device 400 is identified based on data received from the auxiliary control unit through the second communication path.

FIG. 5 is a block diagram showing a configuration of a signal processing device according to an embodiment disclosed in this document.

According to an embodiment, the own its vehicle (e.g., the vehicle 110 or 210 of FIG. 1 or FIG. 2) may perform various operations for operating the own its vehicle by using a signal processing device (e.g., a signal processing device 300 of FIG. 3).

For example, the signal processing device may include a main control unit 510 (e.g., a main control unit 310 of FIG. 3), a plurality of auxiliary control units 521, 522, ... (e.g., an auxiliary control unit 320 of FIG. 3), and an end device 530 (e.g., an end device 330 of FIG. 3).

For example, the main control unit 510 may transmit and receive data with the plurality of auxiliary control units 521, 522, ... and/or end device 530 based on various communication paths.

As an example, the main control unit 510 may directly transmit a first signal (e.g., a wake-up signal) to the end device 530 through a bypass path 591. The first signal may be, for example, transmitted from the main control unit 510 to the first auxiliary control unit 521 and then directly transmitted to the end device 530 by bypassing and without going through the processing of the first auxiliary control unit 521.

As an example, the main control unit 510 may transmit a second signal (e.g., a control signal) to the second auxiliary control unit 522 through a general path 592. The second signal may include, for example, a control signal for controlling a component (e.g., a battery, a sensor, a camera, an actuator, or a driving unit) included in the second auxiliary control unit 522 (or controlled by the second auxiliary control unit 522). The second signal may be transmitted from the main control unit 510 to the second auxiliary control unit 522, converted using the conversion unit of the second auxiliary control unit 522, and then processed by the MCU of the second auxiliary control unit 522.

FIG. 6 is a block diagram showing a configuration of a signal processing device according to an embodiment disclosed in this document.

According to an embodiment, a signal processing device (e.g., a signal processing device 300 of FIG. 3) may include at least one of a main control unit 610 (e.g., an HPC 150 or 250 of FIG. 1 or FIG. 2 or a main control unit 310 of FIG. 3), an auxiliary control unit 620 (e.g., a zone controller of FIG. 1 or an auxiliary control unit 320 of FIG. 3), an end device 630 (e.g., an end device 330 of FIG. 3), or any combination thereof. For example, components included in a signal processing device may transmit and receive power and/or data based on various communication paths.

For example, the main control unit 610 may transmit and receive data with a plurality of controllers corresponding to a plurality of zones included in an its own vehicle, respectively. The main control unit 610 may include, for example, at least one processor having relatively high performance compared to the plurality of controllers.

For example, the main control unit 610 may determine a communication path for transmitting a signal to the auxiliary control unit 620 or the end device 630 based on the operating state of the signal processing device (or the its own vehicle).

For example, when power is supplied to the signal processing device, the main control unit 610 may transmit a wake-up signal for wake-up to the auxiliary control unit 620 and the end device 630.

For example, the main control unit 610 may transmit a wake-up signal to the auxiliary control unit 620 through a first path 691. The auxiliary control unit 620 may perform booting and activate the peripheral device of the auxiliary control unit 620 based on receiving the wake-up signal.

For example, the main control unit 610 may transmit the wake-up signal to the end device 630 by bypassing the auxiliary control unit 620, through the first path 691. The auxiliary control unit 620 may bypass the wake-up signal transmitted through the first path 691 and transmit the wake-up signal to the end device 630 through a second path 692.

For example, the main control unit 610 may transmit the first control signal for controlling the end device 630 to the auxiliary control unit 620 through the first path 691. The auxiliary control unit 620 may input the first control signal to a first conversion unit 651 through the first path 691 and a third path 693. The auxiliary control unit 620 may convert the received first control signal of the first layer into the second control signal of the second layer by using the first conversion unit 651, process the second control signal using an MCU 660, and then convert the second control signal again into the third control signal of the first layer by using the second conversion unit 652, and transmits the converted third control signal to the end device 630 through a fourth path 694.

As an example, the first layer may include a PHY layer, and the second layer may include a MAC layer. As an example, the first control signal may include a TD+ signal or a TD- signal, and the second control signal may include a Media Independent Interface (MII) signal.

For example, the end device 630 may receive a bypassed signal (e.g., a wake-up signal) via the second path 692 through the first interface 681.

For example, the end device 630 may receive a signal (e.g., a control signal) transmitted via fourth path 694 through the second interface 682 that is distinct from the first interface 681.

The above-described embodiments are exemplary, and the main control unit 610 may transmit a wake-up signal to the end device 630 through the fourth path 694 or transmit a control signal to the end device 630 through the second path 692, depending on the operating state of the signal processing device.

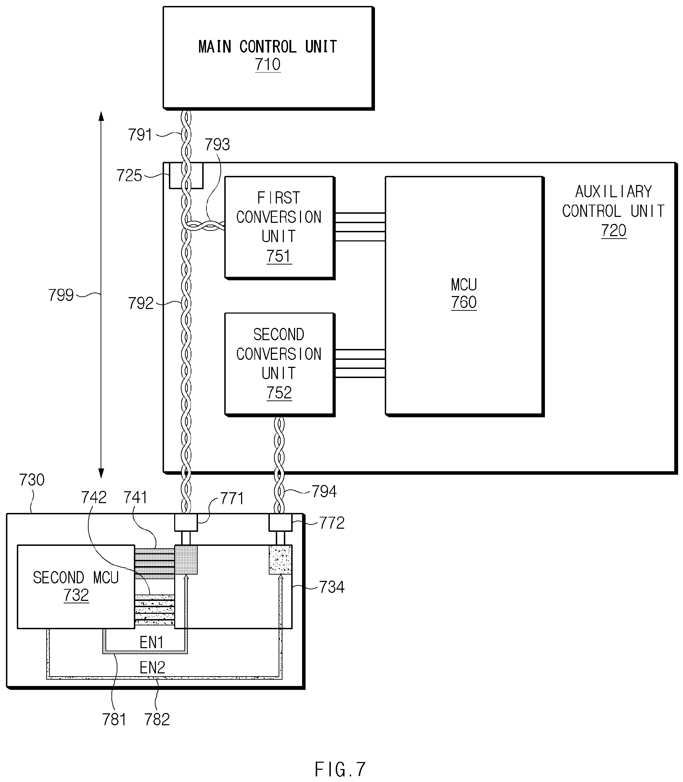

FIG. 7 is a block diagram showing a configuration of a signal processing device according to an embodiment disclosed in this document.

According to an embodiment, a signal processing device (e.g., a signal processing device 300 of FIG. 3) may include at least one of a main control unit 710 (e.g., an HPC 150 or 250 of FIG. 1 or FIG. 2 or a main control unit 310 of FIG. 3), an auxiliary control unit 720 (e.g., a zone controller of FIG. 1 or an auxiliary control unit 320 of FIG. 3), an end device 730 (e.g., an end device 330 of FIG. 3), or any combination thereof. For example, components included in the signal processing device may transmit and receive power and/or data based on various communication paths.

For example, the auxiliary control unit 720 may include a first conversion unit 751, a second conversion unit 752, and a first MCU 760 (e.g., an MCU 660 of FIG. 6). The first conversion unit 751 and the second conversion unit 752 may be implemented as one conversion unit.

For example, the end device 730 may include at least one conversion unit 734, a second MCU 632, a first interface 771, and a second interface 772. The end device 730 may, for example, convert a signal transmitted through the first interface 771 through at least one conversion unit 734, and then transmit the signal to the second MCU 732 (e.g., the processor 450 of FIG. 4) through a first processing path 741 and process the the signal. The end device 730 may, for example, convert a signal transmitted through the second interface 772 through at least one conversion unit 734, and then transmit the signal to the second MCU 732 through a second processing path 742 and process the the signal.

As an example, the end device 730 may directly transmit and receive a designated signal through the main control unit 710 and a first communication path 781. The first communication path 781 may be a communication path that is directly connected to the main control unit 710 through the first path 791 and the second path 792. The designated signal may include, for example, an error situation regarding the signal processing device (or the its own vehicle).

As an example, the end device 730 may transmit and receive various signals through the auxiliary control unit 720 and the second communication path 782. The second communication path 782 may be a communication path that is connected to the auxiliary control unit 720 through a fourth path 794 and connected to the main control unit 710 through the first path 791, a third path 793, and the fourth path 794.

For example, the main control unit 710 may transmit signals to the auxiliary control unit 720 and/or the end device 730 based on various communication paths.

For example, if it is identified that a designated event has occurred in at least one of a plurality of auxiliary control units including the auxiliary control unit 720 and a plurality of end devices including the end device 730, the main control unit 710 may transmit an emergency control signal to the end device 730 based on a communication path different from the existing transmission and reception paths for control signal (e.g., the control signal transmission and reception path including the first path 791, the third path 793, and the fourth path 794). The communication path for the emergency control signal may be defined as an emergency communication path 799.

As an example, if it is identified that the designated event has occurred, the main control unit 710 may transmit an emergency control signal of a first layer to the end device 730 via the first path 791 and the second path 792, thereby bypassing the auxiliary control unit 720. The auxiliary control unit 720 may bypass the emergency control signal transmitted through the first path 791 and directly transmit the emergency control signal to the end device 730. The end device 730 may receive the emergency control signal through the first interface 771 connected to the second path 792.

As an example, if it is identified that the designated event has occurred, the end device 730 may activate the first communication path 781 and deactivate the second communication path 782. Through this, the end device 730 may improve the communication speed with the main control unit 710.

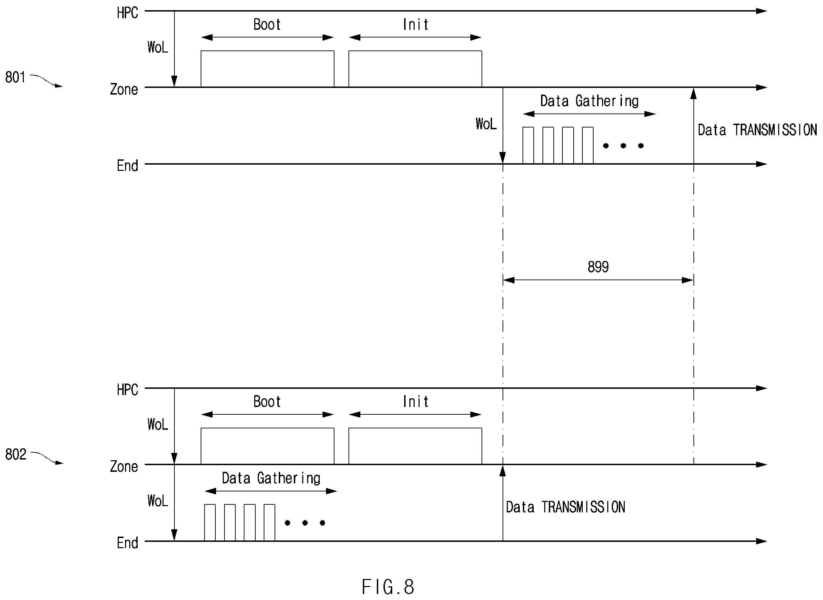

FIG. 8 is a graph showing an operation sequence by a signal processing method according to an embodiment disclosed in this document.

Reference numbers 801 and 802 of FIG. 8 are graphs showing a signal transmission and reception process between an HPC (e.g., a main control unit 310 of FIG. 3), a Zone (e.g., an auxiliary control unit 320 of FIG. 3), and an End (e.g., an end device 330 of FIG. 3) according to the passage of time.

Referring to reference number 801, when the HPC is supplied with power, the HPC may transmit a wake-up signal to the Zone based on Wake on Lan (WoL). The Zone may perform booting and activate (or, init) peripheral devices based on receiving the wake-up signal.

For example, the Zone may transmit a wake-up signal to the End based on WoL after activating the peripheral devices. The End may perform a data gathering operation after being woken up based on receiving the wake-up signal, and may transmit data including an execution process or an execution result to the Zone.

Referring to reference number 802, according to the signal processing method of this document, if the HPC transmits the wake-up signal to the Zone based on WoL, the Zone may bypass the wake-up signal and transmit the wake-up signal to the End substantially simultaneously. Thereafter, while the Zone performs booting and peripheral device activation, the End may be woken up and then perform a data gathering operation.

By the signal processing method of this document according to reference number 802, the End may transmit data according to the data gathering operation, as quickly as the designated time 899, to the Zone.

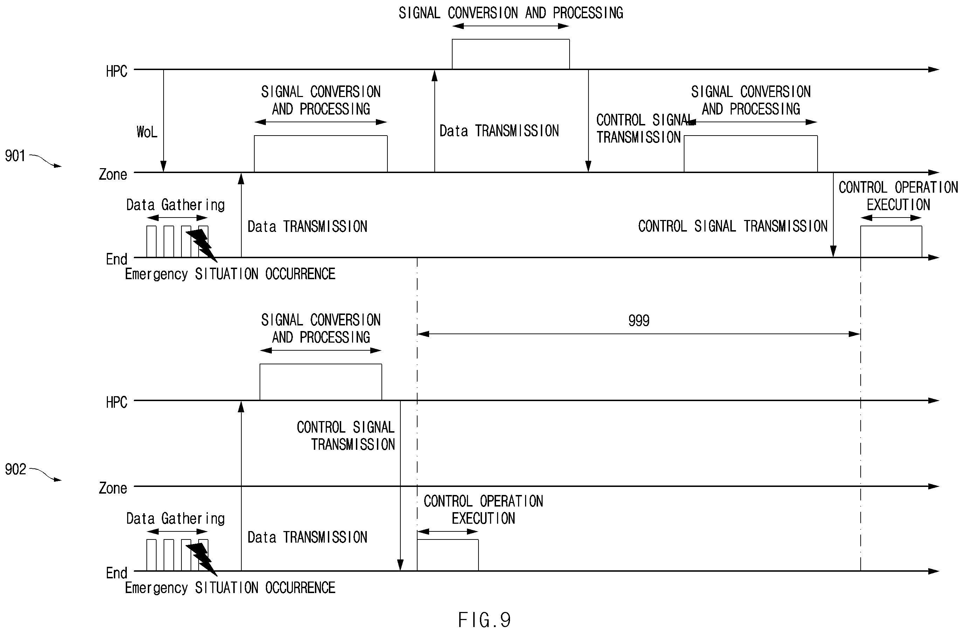

FIG. 9 is a graph showing an operation sequence by a signal processing method according to an embodiment disclosed in this document.

Reference numbers 901 and 902 of FIG. 9 are graphs showing signal transmission and reception processes between an HPC (e.g., a main control unit 310 of FIG. 3), a Zone (e.g., an auxiliary control unit 320 of FIG. 3), and an End (e.g., an end device 330 of FIG. 3) according to the passage of time. For example, operations according to reference numbers 901 and 902 may include operations after the Zone and the End have already been woken up.

Referring to reference number 901, the End may identify that a designated event (e.g., an emergency situation) regarding an error situation has occurred while performing a data gathering operation. The End may transmit data regarding the designated event to the Zone, and the Zone may perform signal conversion and processing operations on the data and then transmit the data to the HPC. The HPC may process and control the transmitted data to generate a control signal and transmit the control signal to the Zone. Thereafter, the Zone performs conversion and processing operations on the received control signal and then transmits the processed control signal to the End, and the End may perform a control operation based on the transmitted control signal.

Referring to reference number 902, according to the signal processing method of this document, the End may identify that the designated event (e.g., the emergency situation) regarding an error situation has occurred while performing a data gathering operation. The End may directly transmit data regarding the designated event to the HPC through a designated communication path (e.g., an emergency communication path 799 of FIG. 7). The HPC may process and control the received data to generate a control signal and directly transmit the control signal to the End through a designated communication path. The End may perform a control operation based on the transmitted control signal.

By the signal processing method of this document according to reference number 902, the End may perform a control operation corresponding to a designated event as quickly as the designated time 999.

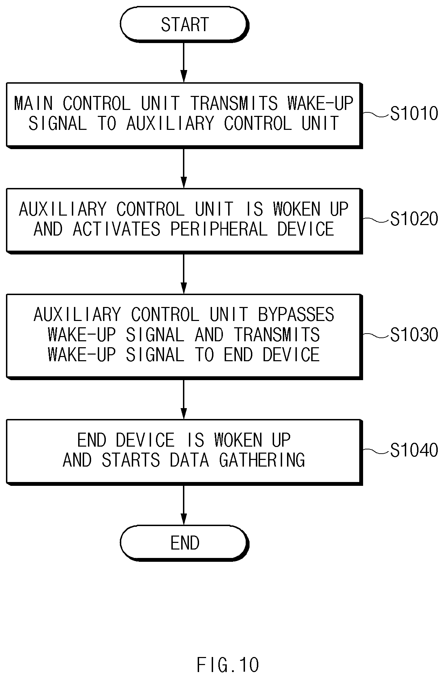

FIG. 10 is a flowchart of a signal processing method according to an embodiment disclosed in this document.

According to an embodiment, a signal processing device (e.g., a signal processing device 300 of FIG. 3) may perform the operations disclosed in FIG. 10. For example, at least some of the components included in the signal processing device (e.g., the main control unit 310, the auxiliary control unit 320, and the end device 330 of FIG. 3) may be set to perform the operations of FIG. 10.

In the following embodiment, operations of S1010 to S1040 may be performed sequentially, but are not necessarily performed sequentially. For example, the order of the operations may be changed, and at least two operations may be performed in parallel. In addition, contents corresponding to or overlapping with the contents described above in relation to FIG. 10 may be briefly described or omitted.

Referring to FIG. 10, the signal processing method may include transmitting, by the main control unit, a wake-up signal to the auxiliary control unit (S1010), causing the the auxiliary control unit to be woken up and to activate (or init) a peripheral device (S1020), bypassing the wake-up signal and transmitting the wake-up signal to an end device by the auxiliary control unit, (S1030), and causing the end device to be woken up and to start data gathering (S1040).

In step S1020, the auxiliary control unit may perform booting and activate the peripheral device of the auxiliary control unit based on receiving the wake-up signal. The auxiliary control unit may perform booting using the wake-up signal and simultaneously transmit the wake-up signal to the end device by bypassing the wake-up signal.

In step S1040, the end device may start data gathering based on receiving the wake-up signal while the auxiliary control unit performs booting.

After performing step S1040, the auxiliary control unit may receive a first control signal of the first layer for controlling the end device regarding a battery pack of an its own vehicle from the main control unit. The auxiliary control unit may, for example, convert the first control signal into a second control signal of a second layer using a conversion unit, performs processing on the second control signal, convert the processed second control signal into a third control signal of the first layer using the conversion unit, and then transmit the third control signal to the end device. For example, the first layer may include a PHY layer, and the second layer may include a MAC layer. For example, the auxiliary control unit may convert a first control signal including a TD+ signal or a TD- signal into a second control signal including a Media Independent Interface (MII) signal.

When the auxiliary control unit and the end device are woken up through the illustrated steps, the main control unit may transmit an emergency control signal for controlling the end device (or, the battery) to the end device based on the occurrence of a designated event. For example, if it is identified that a designated event regarding an error situation has occurred in at least one of a plurality of auxiliary control units including an auxiliary control unit and a plurality of end devices including an end device, the main control unit may transmit the emergency control signal of the first layer for controlling the end device to the auxiliary control unit, and the auxiliary control unit may bypass the emergency control signal and transmit the emergency control signal to the end device. The main control unit may determine that a designated event has occurred, for example, if at least one of a temperature, pressure, current, or any combination thereof of a battery pack included in the end device deviates from a critical range or when an abnormality occurs in at least one of the plurality of auxiliary control units such that data is not transmitted to the main control unit or a connection with the end device should be blocked.

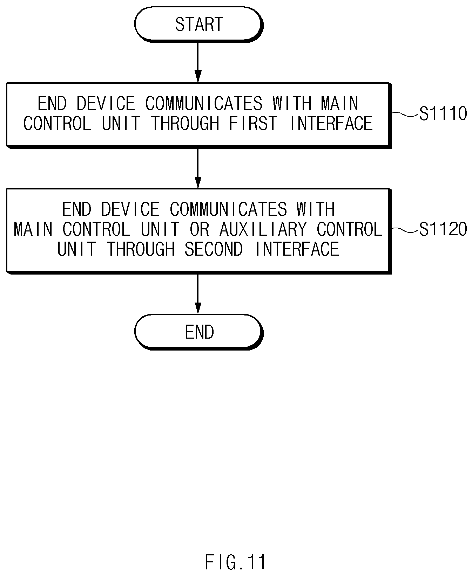

FIG. 11 is a flowchart of a signal processing method according to an embodiment disclosed in this document.

According to an embodiment, a signal processing device (e.g., a signal processing device 300 of FIG. 3) may perform the operations disclosed in FIG. 11. For example, at least some of the components included in the signal processing device (e.g., the main control unit 310, the auxiliary control unit 320, and the end device 330 of FIG. 3) may be set to perform the operations of FIG. 11.

In the following embodiment, the operations of S1110 and S1120 may be performed sequentially, but are not necessarily performed sequentially. For example, the order of the operations may be changed, and at least two operations may be performed in parallel. In addition, contents corresponding to or overlapping with the contents described above in relation to FIG. 11 may be briefly described or omitted.

Referring to FIG. 11, the signal processing method may include communicating with, by an end device, a main control unit through a first interface (S1110), and communicating with, by an end device, the main control unit or an auxiliary control unit through a second interface (S1120).

In step S1110, the end device may receive a wake-up signal transmitted from the main control unit by bypassing the auxiliary control unit, through the first interface. For example, the end device may control the operation of the battery pack based on a result obtained by receiving the first control signal of the first layer for controlling the battery pack included in the end device from the main control unit through the first interface, converting the first control signal into the second control signal of the second layer using a conversion unit, and processing the second control signal using an MCU. For example, the end device may transmit and receive an emergency control signal related to a designated event to and from the main control unit via the first communication path through the first interface.

In step S1120, the end device may receive a control signal transmitted from the main control unit or the auxiliary control unit through the second interface. The control signal may include a signal regarding the control of the battery pack included in the end device.

For example, if it is identified that a designated event including an error situation has occurred, the end device may activate a first communication path connected to the main control unit through the first interface by bypassing the auxiliary control unit, and deactivate a second communication path connected to the main control unit through the second interface via the auxiliary control unit. The end device may identify that a designated event has occurred, as an example, when an internal error regarding the operation of a battery pack included in the end device is identified, or an external error is received from the auxiliary control unit through the second communication path, or a LOC signal regarding an error situation is detected. For example, the end device may determine that an external error has been received if an abnormality symptom regarding an external device that is distinct from the end device is identified based on data received from the auxiliary control unit through the second communication path.

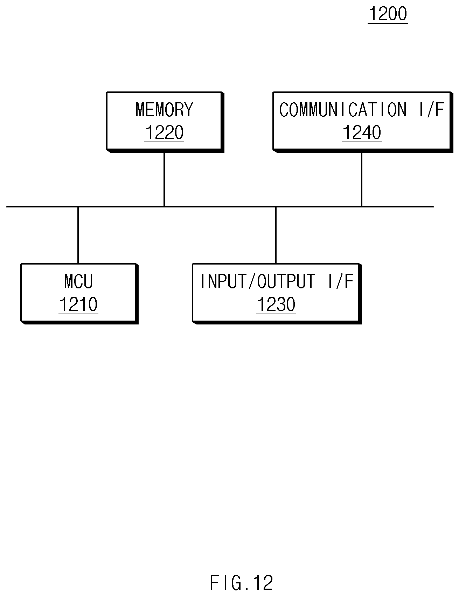

FIG. 12 is a block diagram showing a hardware configuration of a computing system for performing an operating method of a signal processing device according to an embodiment disclosed in this document.

Referring to FIG. 12, a computing system 3000 according to an embodiment disclosed in this document may include an MCU 1010, a memory 1020, an input/output I/F 1030, and a communication I/F 1040.

The MCU 1010 may be a processor that executes various programs stored in the memory 1020, processes various information including battery data, etc. through these programs, and performs the functions of the processor (or the control unit) included in the signal processing device shown in FIG. 3 described above.

The memory 1020 may store various programs for performing functions of the signal processing device. In addition, the memory 1020 may store various types of information including battery data (voltage data, capacity data, etc.), differential capacity data, etc., and may include a constructed database.

A plurality of such memories 1020 may be provided as needed. The memory 1020 may be a volatile memory or a nonvolatile memory. The memory 1020 used as the volatile memory may be RAM, DRAM, SRAM, etc. The memory 1020 used as the nonvolatile memory may be ROM, PROM, EAROM, EPROM, EEPROM, flash memory, etc. The examples of the memories 1020 listed above are only examples and are not limited to these examples.

The input/output I/F 1030 may provide an interface that allows data to be transmitted and received by connecting an input device (not shown) such as a keyboard, mouse, or touch panel and an output device (not shown) such as a display with the MCU 1010.

The communication I/F 1040 is a configuration that can transmit and receive various data with the server, and may be various devices that can support wired or wireless communication. For example, the signal processing device may transmit and receive various information including battery data, etc. to and from a separately provided external server through the communication I/F 1040.

In this way, the computer program according to an embodiment disclosed in this document may be implemented as a module that performs, for example, each function shown in FIG. 1, by being recorded in the memory 1020 and processed by the MCU 1010.

In the above, even though all the components constituting the embodiments disclosed in this document have been described as being combined as one or operating in combination, the embodiments disclosed in this document are not necessarily limited to such embodiments. That is, within the scope of the purpose of the embodiments disclosed in this document, all of the components may be selectively combined and operated in one or more combinations.

In addition, the terms "include," "configure," or "have" described above, unless specifically stated to the contrary, mean that the corresponding component may be included, and therefore should be interpreted as being able to further include other components rather than excluding other components. All terms including technical or scientific terms have the same meaning as commonly understood by a person skilled in the art to which the embodiments disclosed in this document belong, unless otherwise defined. Terms commonly used, such as terms defined in the dictionary, should be interpreted as being consistent with the contextual meaning of the relevant technology, and should not be interpreted in an idealized or overly formal sense unless clearly defined in this document.

The above description is merely an illustrative description of the technical ideas disclosed in this document, and those skilled in the art to which the embodiments disclosed in this document belong may make various modifications and variations without departing from the essential characteristics of the embodiments disclosed in this document. Accordingly, the embodiments disclosed in this document are intended to illustrate rather than limit the technical ideas of the embodiments disclosed in this document, and the scope of the technical ideas disclosed in this document is not limited by these embodiments. The scope of protection of the technical ideas disclosed in this document should be interpreted by the scope of the claims below, and all technical ideas within the equivalent scope thereof should be interpreted as being included in the scope of rights of this document.

## Claims

1. A signal processing device comprising:
a main control unit;
an auxiliary control unit electrically connected to the main control unit; and
an end device electrically connected to the auxiliary control unit,
wherein the main control unit is configured to transmit a wake-up signal to the auxiliary control unit when power is supplied, and
the auxiliary control unit is configured to bypass the wake-up signal and transmit the wake-up signal to the end device.

2. The signal processing device of claim 1, wherein the auxiliary control unit is configured to perform booting and activate a peripheral device of the auxiliary control unit based on receiving the wake-up signal, and
the end device is configured to start data gathering based on receiving the wake-up signal while the auxiliary control unit performs booting.

3. The signal processing device of claim 1, wherein the auxiliary control unit is configured to:
receive a first control signal of a first layer for controlling the end device regarding a battery pack of an its own vehicle from the main control unit;
convert the first control signal into a second control signal of a second layer using a conversion unit and then process the second control signal; and
convert the processed second control signal into a third control signal of the first layer using the conversion unit and then transmit the third control signal to the end device.

4. The signal processing device of claim 3, wherein the first layer includes a PHY layer, and the second layer includes a MAC layer.

5. The signal processing device of claim 3, wherein the auxiliary control unit is configured to convert the first control signal including a TD+ signal or a TD- signal into the second control signal including a Media Independent Interface (MII) signal.

6. The signal processing device of claim 1, wherein the main control unit is configured to transmit an emergency control signal of a first layer for controlling the end device to the auxiliary control unit when identifying that a designated event has occurred in at least one of a plurality of auxiliary control units including the auxiliary control unit and a plurality of end devices including the end device, and
the auxiliary control unit is configured to bypass the emergency control signal and transmit the emergency control signal to the end device.

7. The signal processing device of claim 6, wherein the main control unit is configured to determine that the designated event has occurred when at least one of a temperature, pressure, current, or any combination thereof of a battery pack included in the end device deviates from a critical range, or when an abnormality occurs in at least one of the plurality of auxiliary control units such that data is not transmitted to the main control unit or a connection with the end device should be blocked.

8. A vehicle comprising the signal processing device according to any one of claims 1 to 7.

9. A signal processing method comprising:
transmitting, by a main control unit, a wake-up signal to an auxiliary control unit when power is supplied to a signal processing device; and
bypassing the wake-up signal and transmitting the wake-up signal to the end device, by the auxiliary control unit.

10. The signal processing method of claim 9, further comprising:
performing, by the auxiliary control unit, booting and activating a peripheral device of the auxiliary control unit based on receiving the wake-up signal; and
starting, by the end device, data gathering based on receiving the wake-up signal while the auxiliary control unit performs booting.

11. The signal processing method of claim 9, further comprising:
receiving, by the auxiliary control unit, a first control signal of a first layer for controlling the end device regarding a battery pack of an its own vehicle from the main control unit;
by the auxiliary control unit, converting the first control signal into a second control signal of a second layer using a conversion unit and then processing the second control signal; and
by the auxiliary control unit, converting the processed second control signal into a third control signal of the first layer using the conversion unit and then transmitting the third control signal to the end device.

12. The signal processing method of claim 11, further comprising:
converting, by the auxiliary control unit, the first control signal including a TD+ signal or a TD- signal into the second control signal including a Media Independent Interface (MII) signal.

13. The signal processing method of claim 9, further comprising:
transmitting, by the main control unit, an emergency control signal of a first layer for controlling the end device to the auxiliary control unit when identifying that a designated event has occurred in at least one of a plurality of auxiliary control units including the auxiliary control unit and a plurality of end devices including the end device; and
by the auxiliary control unit, bypassing the emergency control signal and transmitting the emergency control signal to the end device.

14. The signal processing method of claim 13, further comprising:
determining, by the main control unit, that the designated event has occurred when at least one of a temperature, pressure, current, or any combination thereof of a battery pack included in the end device deviates from a critical range, or when an abnormality occurs in at least one of the plurality of auxiliary control units such that data is not transmitted to the main control unit or a connection with the end device should be blocked.

15. An auxiliary control unit for controlling a signal processing device, comprising:
a memory storing at least one instruction; and
a processor operatively connected with the memory,
wherein the at least one instruction, when executed by the processor, is configured to cause the auxiliary control unit to:
receive a wake-up signal from a main control unit when power is supplied to the signal processing device, and
bypass the wake-up signal and transmit the wake-up signal to an end device.

16. The auxiliary control unit of claim 15, wherein the at least one instruction, when executed by the processor, is configured to cause the auxiliary control unit to perform booting and activate a peripheral device of the auxiliary control unit based on receiving the wake-up signal.

17. The auxiliary control unit of claim 15, wherein the at least one instruction, when executed by the processor, is configured to cause the auxiliary control unit to:
receive a first control signal of a first layer for controlling the end device regarding a battery pack of an its own vehicle from the main control unit;
convert the first control signal into a second control signal of a second layer using a conversion unit and then process the second control signal; and
convert the processed second control signal into a third control signal of the first layer using the conversion unit and then transmit the third control signal to the end device.

18. The auxiliary control unit of claim 15, wherein the at least one instruction, when executed by the processor, is configured to cause the auxiliary control unit to:
receive an emergency control signal of a first layer for controlling the end device from the main control unit based on an occurrence of a designated event in at least one of a plurality of auxiliary control units including the auxiliary control unit and a plurality of end devices including the end device; and
bypass the emergency control signal and transmit the emergency control signal to the end device.
